# EUROPÄISCHE PATENTSCHRIFT

(11) **EP 1 331 254 B1**
(45) Veröffentlichungstag und Bekanntmachung des Hinweises auf die Patenterteilung: **30.08.2006**
(21) Anmeldenummer: 02026283.8
(22) Anmeldetag: 27.11.2002
(51) Int. Cl.: C09D 17/00, D21H 19/38, C09C 1/30, B41M 5/00

(54) **Kationische Mischoxid-Dispersion, Streichfarbe und tintenaufnehmendes Medium**
Cationic mixed oxide dispersion, coating colour and ink receptive medium
Oxide modifiée pour la rendre cationique, couleur d'enduction et matériau récepteur d'encre

(30) Priorität: 26.01.2002 DE 10203047
(43) Veröffentlichungstag der Anmeldung: 30.07.2003
(73) Patentinhaber: Degussa AG, 40474 Düsseldorf (DE)
(72) Erfinder: Scharfe, Thomas, 63755 Alzenau (DE); Batz-Sohn, Christoph Dr., 63454 Hanau-Mittelbuchen (DE); Lortz, Wolfgang Dr., 63607 Wächtersbach (DE)

(56) Entgegenhaltungen:
- DE-A- 19 534 327
- PATENT ABSTRACTS OF JAPAN vol. 2000, no. 24, 11. Mai 2001 (2001-05-11) & JP 2001 207078 A (TOKUYAMA CORP), 31. Juli 2001 (2001-07-31)
- PATENT ABSTRACTS OF JAPAN vol. 2000, no. 20, 10. Juli 2001 (2001-07-10) & JP 2001 080204 A (OJI PAPER CO LTD), 27. März 2001 (2001-03-27)

## Beschreibung

Gegenstand der Erfindung ist eine wässerige Dispersion, welche flammenhydrolytisch hergestelltes Siliciumdioxid-Mischoxid und ein kationisches Polymer enthält, eine Streichfarbe, welche diese Dispersion enthält, und ein damit hergestelltes Tintenstrahl-Aufnahmemedium.

Es ist bekannt Siliciumdioxid enthaltende wässerige Dispersionen zur Herstellung von Streichfarben für tintenaufnehmende Schichten im Inkjet-Bereich einzusetzen. Zur Verbesserung der Qualität, insbesondere der Wasserfestigkeit und Farbdichte der resultierenden Tintenaufnahmeschichten, werden diesen Dispersionen in EP-A-1013605 und DE-A-10033054 kationische Polymere zugesetzt. Insbesonders bei hochgefüllten Dispersionen, die wegen besserer Rezeptierbarkeit der resultierenden Streichfarben besonders erwünscht sind, führt jedoch die Zugabe von kationischen Polymeren zu nicht vernachlässigbaren Problemen, zum Beispiel zu einer nicht ausreichenden Lagerstabilität der Dispersion.

In hochgefüllten Dispersionen kommen sich die Feststoffpartikel so nahe, dass Oberflächenwechselwirkungen zu einem starken Viskositätsanstieg und Flokulation führen können. Bei einer Kationisierung der Feststoffpartikel können diese unerwünschten Effekte sogar noch verstärkt werden. Dies kann dadurch erklärt werden, dass die zur Kationisierung der Partikel erforderliche Menge an kationischem Polymer so groß ist, dass das Polymer zu Verbrückungen von Feststoffpartikeln bewirken kann, die dann zu einer erhöhten Viskosität oder zur Flokulation führt.

Zudem enthalten diese Dispersionen mit hohem Füllgrad beträchtliche Mengen an kationischen Polymeren, die weiterhin ein Kostenfaktor sind.

Neben der Erhöhung des Füllgrades der Dispersion ist eine Reduzierung des Binderanteils in der Streichfarbe wünschenswert. Die Maßnahmen sollen dazu dienen, Streichfarben mit einem hohen Feststoffgehalt bereitzustellen, die sich bei gegebener Trockenkapazität schnell trocknen lassen und so die Produktivität der Streichanlage erhöhen können. Zudem sollen die erhaltenen tintenaufnehmenden Medien eine hohe Farbdichte und einen hohen Glanz aufweisen.

Daher wird speziell im Inkjet-Bereich nach Lösungen gesucht, die Mengen an kationischen Polymeren zu reduzieren und dennoch hochgefüllte, stabile Dispersionen zu erhalten. Die Aufgabe der Erfindung ist es daher, eine stabile Dispersion mit einer im Vergleich zum Stand der Technik reduzierten Menge an kationischen Polymeren bereitzustellen.

Eine weitere Aufgabe der Erfindung ist es, ausgehend von dieser Dispersion, eine Streichfarbe für ein tintenaufnehmendes Medium mit hohem Glanz und hoher Farbdichte bereitzustellen.

Gegenstand der Erfindung ist eine stabile, wässerige Dispersion, enthaltend flammenhydrolytisch hergestellte Siliciumdioxid-Mischoxidpartikel mit Aluminiumoxid oder Titandioxid als Mischoxidkomponente und einer BET-Oberfläche zwischen 5 und 600 m²/g, die ein negatives Zeta-Potential aufweisen und ein gelöstes kationisches Polymer mit einer massengemittelten Molmasse von weniger als 100 000 g/mol, wobei die Dispersion ein positives Zeta-Potential aufweist.

Unter stabil ist zu verstehen, dass die dispergierten Mischoxidpartikel nicht agglomerieren und sich in der Dispersion absetzen und gegebenenfalls einen harten, kompakten Bodenkörper bilden. In der Regel sind die erfindungsgemäßen Dispersionen über einen Zeitraum von einem Monat stabil.

Unter wässerig zu verstehen, dass der Hauptbestandteil der flüssigen Phase Wasser ist.

Unter flammenhydrolytisch ist die Hydrolyse von Silicium-und Aluminiumverbindungen bzw. Silicium- und Titanverbindungen in der Gasphase in einer Flamme, erzeugt durch die Reaktion von Wasserstoff und Sauerstoff, zu verstehen. Dabei werden zunächst hochdisperse, nicht poröse Primärpartikel gebildet, die im weiteren Reaktionsverlauf zu Aggregaten zusammenwachsen und diese weiter zu Agglomeraten zusammenlagern können. Die BET-Oberfläche dieser Primärpartikel liegt zwischen 5 und 600 m²/g. Die Oberflächen dieser Partikel können saure oder basische Zentren aufweisen. Die Erfindung schließt auch physikalische Mischungen von Silicium-Aluminium- bzw. Silicium-Titan-Mischoxiden mit verschiedenen Gewichtsanteilen der Mischoxidkomponenten und/oder verschiedenen BET-Oberflächen ein.

Unter Mischoxid ist die innige Vermischung von Siliciumdioxid mit der Mischoxidkomponente auf atomarer Ebene zu verstehen. Dabei weisen die Primärpartikel Si-O-Al bzw. Si-O-Ti-Bindungen auf. Daneben können auch Bereiche von Siliciumdioxid neben Aluminiumoxid bzw. Titandioxid vorliegen.

Die Herstellung dieser Siliciumdioxid-Mischoxid-Partikel kann zum Beispiel nach der in DE-A-19919635 (SiO₂-Al₂O₃), in DE-A-4228711 (SiO₂-Al₂O₃) oder in DE-A-4235996 (SiO₂-TiO₂) beschriebenen Methode erfolgen. Dabei wird Siliciumtetrachlorid und Aluminiumchlorid bzw. Titantetrachlorid vermischt und zusammen mit einem Wasserstoff-Luft-Gemisch verbrannt werden.

Weiterhin können die Siliciumdioxid-Mischoxidpartikel nach der in DE-A-19650500 (SiO₂-Al₂O₃ und SiO₂-TiO₂) beziehungsweise in DE-A-19847161 (SiO₂-Al₂O₃) beschriebenen Methode hergestellt werden, unter der Maßgabe dass der Anteil der gewichtsmässig kleineren Mischoxidkomponente, entweder Siliciumdioxid oder Aluminiumoxid bzw. Titandioxid, 20 Gew.-% nicht übersteigt. Im Falle, dass die Mischoxidkomponente Aluminiumoxid oder Titandioxid die gewichtsmäßig kleinere Komponente ist, wird ein durch Vernebelung erhaltenes Aerosol enthaltend die Lösung oder Suspension eines Salzes einer Aluminium- bzw. Titanverbindung in ein Gasgemisch enthaltend ein Siliciumtetrahalogenid, Wasserstoff und Luft eingespeist und mit diesem homogen vermischt und anschliessend das Aerosol-Gas-Gemisch innerhalb einer Brennkammer in einer Flamme zur Reaktion gebracht. Im Falle, dass Siliciumdioxid die gewichtsmäßig kleinere Komponente ist, enthält das Aerosol das Salz einer Siliciumverbindung und das Gasgemisch ein Aluminium- bzw. Titanhalogenid.

Die Mengenverhältnisse SiO₂/Al₂O₃ bzw. SiO₂/TiO₂ sind nicht beschränkt, solange die Partikel eine negative Oberflächenladung aufweisen. So weist zum Beispiel ein Silicium-Aluminium-Mischoxid mit 66 Gew.-% Al₂O₃ im schwach sauren bis neutralen pH-Bereich ein negatives Zeta-Potential auf.

Ein Maß für die Oberflächenladung der Partikel ist das Zetapotential, welches beispielsweise durch kationische Polymere odere andere Substanzen, die sich an der Oberfläche anlagern, verschoben werden kann. Unter Zeta-Potential ist das Potential an der Scherebene innerhalb der elektrochemischen Doppelschicht Mischoxidpartikel/Elektrolyt in der Dispersion zu verstehen. Das Zeta-Potential hängt u.a. von der Art des Partikels ab, zum Beispiel Siliciumdioxid, Aluminiumoxid, Mischoxidpartikel ab. Eine wichtige Größe im Zusammenhang mit dem Zeta-Potential ist der isoelektrische Punkt (IEP) für einen Partikel. Der IEP gibt den pH-Wert an, bei dem das Zeta-Potential Null ist. Der IEP liegt bei Aluminiumoxid bei einem pH von ca. 9 bis 10, bei Siliciumdioxid bei unterhalb von pH 3,8.

Die Ladungsdichte an der Oberfläche kann beeinflusst werden durch Veränderung der Konzentration der potentialbestimmenden Ionen im umgebenden Elektrolyten. In denjenigen Dispersionen, in denen die Partikel saure oder basische Gruppen auf der Oberfläche tragen, kann die Ladung durch Einstellen des pH-Wertes geändert werden. Je größer der Unterschied zwischen pH-Wert und IEP, desto stabiler ist die Dispersion.

Partikel aus dem gleichen Material werden das gleiche Vorzeichen der Oberflächenladungen besitzen und sich somit abstoßen. Wenn das Zeta-Potential zu klein ist, kann die abstoßende Kraft jedoch nicht die van der Waals-Anziehung der Partikel kompensieren und es kommt zu Flockung und gegebenenfalls Sedimentation der Partikel.

Das Zeta-Potential kann beispielsweise bestimmt werden durch Messung des kolloidalen Vibrationsstroms (CVI) der Dispersion oder durch Bestimmung der elektrophoretischen Mobilität.

Die Art des kationischen Polymers ist nicht beschränkt, solange es sich im wässerigen Dispersionsmedium löst und kationische Eigenschaften aufweist.

Es wurde überraschend gefunden, dass bei Verwendung der hier beschriebenen Mischoxidpartikel die Menge an kationischem Polymer in der Dispersion gegenüber Siliciumdioxidpartikeln deutlich reduziert werden kann. Bei Verwendung eines nach DE-A-19847161 mit 0,25 Gew.-% Aluminiumoxid dotierten Siliciumdioxides kann die Menge an kationischem Polymer, hier Polyquat 40U05NV (40 prozentige PDADMAC-Lösung in Wasser, PDADMAC = Poly(diallyldimethylammoniumchlorid), um 25%, bezogen auf die spezifische Oberfläche des Partikels, erniedrigt werden, um die gleiche positive Oberflächenladung zu erzielen, wie bei einem nicht dotierten Siliciumdioxid. Dieses Beispiel zeigt deutlich, dass es sich nicht um einen additiven Effekt aus der Menge der Mischoxidkomponente Aluminiumoxid und dem kationischen Polymer handelt. Vielmehr liegt ein synergistischer Effekt zwischen den Mischoxidpartikeln und dem kationischen Polymer vor.

Gleichzeitig wurde gefunden, dass die Verminderung der Menge an kationischem Polymer zu einer Absenkung der Viskosität der Dispersion führt. Dies zeigt, dass Wechselwirkungen zwischen den Partikeln durch das kationische Polymer nach dessen Reduzierung vermindert werden.

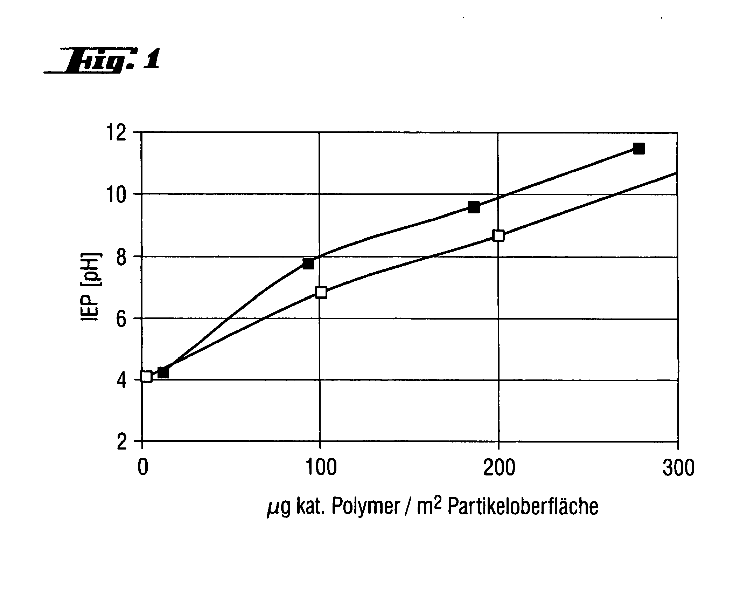

Figur 1 zeigt die Abhängigkeit des isoelektrischen Punktes in Abhängigkeit von der Menge an kationischem Polymer. Mit 0,25 Gew.-% Al₂O₃ dotiertes SiO₂ ist dargestellt in Form schwarzer Quadrate (■) und nicht-dotiertes SiO₂ in Form weisser Quadrate (□). Als Bezugsgröße um die Partikel vergleichen zu können, dient deren spezifische BET-Oberfläche. Die Einheit für die Menge an kationischem Polymer ist daher µg kationisches Polymer pro m² Partikeloberfläche. Zur Erzielung eines bestimmten isoelektrischen Punktes sind bei dem mit Aluminiumoxid dotierten Siliciumdioxidpartikeln bis zu 25% weniger an kationischem Polymer, bezogen auf die Partikeloberfläche, notwendig als bei nicht dotierten Siliciumdioxidpartikeln.

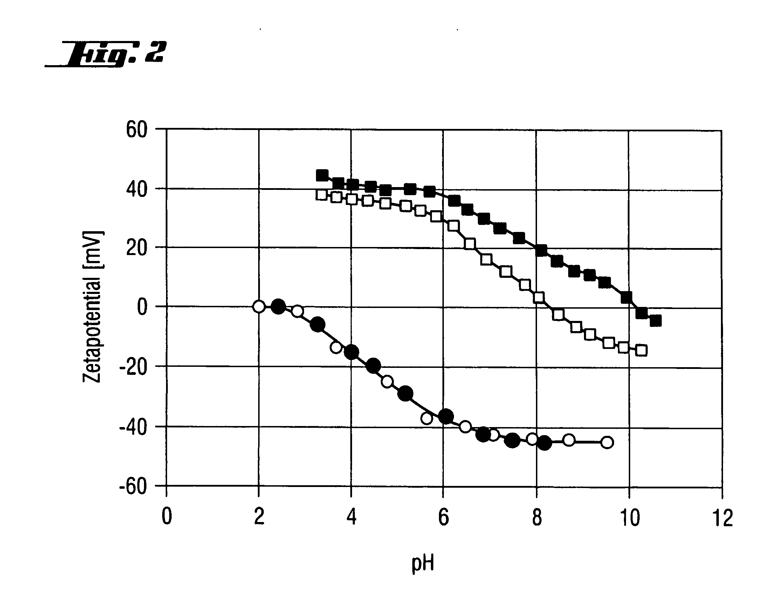

Figur 2 zeigt die Abhängigkeit des Zetapotentiales der mit Aluminiumoxid dotierten Siliciumdioxidpartikel mit und ohne kationischem Polymer vom pH-Wert. Das Zeta-Potential der kationisierten Partikel ist dargestellt in Form schwarzer Quadrate (■) für 0,25 Gew.-% Al₂O₃ dotiertes SiO₂ und in Form weisser Quadrate für nicht-dotiertes SiO₂ (□). Das Zeta-Potential der nicht kationisierten Partikel ist dargestellt in Form schwarzer Kreise (•) für 0,25 Gew.-% Al₂O₃ dotiertes SiO₂ und in Form weisser Kreise (o) für nicht-dotiertes SiO₂.
Eine positive Oberflächenladung wird erst in Gegenwart eines kationischen Polymers erzielt. Ferner kann gezeigt werden, dass, in Abwesenheit eines kationischen Polymers, praktisch kein Unterschied im Kurvenverlauf zwischen mit 0,25 Gew.-% Aluminiumoxid dotierten Siliciumdioxidpartikeln und nicht dotierten Siliciumdioxidpartikeln besteht. Erst in Gegenwart eines kationischen Polymeren wird der isoelektrische Punkt der dotierten Partikel um über 2 pH-Einheiten zu höheren Werten gegenüber den nicht dotierten Partikeln verschoben. Entsprechend weist die Dispersion, welche die kationisierten, dotierten Partikel enthält, bei gleicher Menge an kationischem Polymer, bezogen auf die Partikeloberfläche, eine deutlich höhere Stabilität auf.

Die Zetapotentialkurve von nicht dotiertem Siliciumdioxid entspricht weitestgehend derjenigen mit geringen Mengen an Aluminiumoxid dotierten Variante. Das bedeutet, dass die geringen Mengen Aluminiumoxid nicht ausreichen, die Zetapotentialkurve signifikant zu verändern, wohl aber nach Wechselwirkung mit dem kationischen Polymer. Dies kann möglicherweise damit erklärt werden, dass das kationische Polymer auf der Oberfläche des Mischoxidpartikels eine andere Konformation als auf einer Oberfläche eines nicht dotierten Siliciumdioxides einnehmen kann und damit eine andere, bei gleicher Menge höhere Ladungsdichte zur Verfügung stellt.

Das Zeta-Potential der erfindungsgemäßen Dispersion ist positiv. Vorteilhaft kann es einen Wert von mindestens +10 mV, besonders vorteilhaft einen Wert von mindestens +20 mV, aufweisen. In einer besonderen Ausführungsform kann das Zeta-Potential mindestens +30 mV sein.

Zur Erzielung eines hohen Glanzes kann die Sekundärpartikelgrösse der Mischoxidpartikel in der Dispersion kleiner als 0,5 µm, bevorzugt kleiner als 0,3 µm, besonders bevorzugt kleiner als 0,2 µm sein. Die Sekundärpartikelgrösse kann bestimmt werden durch dynamische Lichtstreuung.

Der pH-Wert der Dispersion kann zwischen 2 und 8, bevorzugt zwischen 2,5 und 6, besonders bevorzugt zwischen 3 und 5 liegen.

Der Feststoffgehalt der Dispersion kann zwischen 10 und 70, bevorzugt zwischen 20 und 60, besonders bevorzugt zwischen 30 und 50 Gew.-% liegen. Bei hochoberflächigen Mischoxidpartikeln kann der Feststoffgehalt einer hochgefüllten Dispersion eher an den unteren Grenzen, bei einer niedrigoberflächigen Dispersion eher an der oberen Grenze der angegebenen Bereiche liegen.

Die Viskosität der Dispersion ist bevorzugt kleiner als 5000 mPas bei einer Scherrate von 1 s⁻¹.

Der Gehalt an kationischem Polymer kann zwischen 0,1 und 15, bevorzugt zwischen 0,5 und 10, besonders bevorzugt zwischen 0,8 und 5 Gew.-%, bezogen auf die Menge aus kationischem Polymer und Mischoxidpartikel, betragen.

Die massengemittelte Molmasse des kationischen Polymers ist kleiner als 100 000 g/mol. Bevorzugt ist der Bereich zwischen 2000 und 50000 g/mol.

Kationische Polymere können sein Polymere mit mindestens einer quaternären Ammoniumgruppe, Phosphoniumgruppe, einem Säureaddukt einer primären, sekundären oder tertiären Amingruppe, Polyethylenimine, Polydiallylamine oder Polyallylamine, Polyvinylamine, Dicyandiamidkondensate, Dicyandiamid-Polyamin-Cokondensate oder Polyamid-Formaldehyd-Kondensate.

Bevorzugt sind solche ausgehend von einer Diallylammoniumverbindung, besonders bevorzugt solche ausgehend von einer Dialkyldiallylverbindung, die durch eine radikalische Cyclisierungsreaktion von Diallylaminverbindungen erhalten werden können und die Struktur 1 oder 2 aufweisen können.

Die Strukturen 3 und 4 stellen Copolymere ausgehend von Dialkyldiallylverbindungen dar. Dabei stellen R1 und R2 ein Wasserstoffatom, eine Alkylgruppe mit 1 bis 4 C-Atomen, Methyl-, eine Ethyl-, eine n-Propyl, eine iso-Propyl, eine n-Butyl-, eine iso-Butyl oder eine tert.-Butylgruppe, wobei R1 und R2 gleich oder verschieden sein können. Ein Wasserstoffatom der Alkylgruppe kann ferner durch eine Hydroxygruppe substituiert sein. Y stellt eine radikalpolymerisierbare Monomereinheit, wie z.B. Sulfonyl, Acrylamid, Methacrylamid, Acrylsäure, Methacrylsäure dar.
X⁻ stellt ein Anion dar.

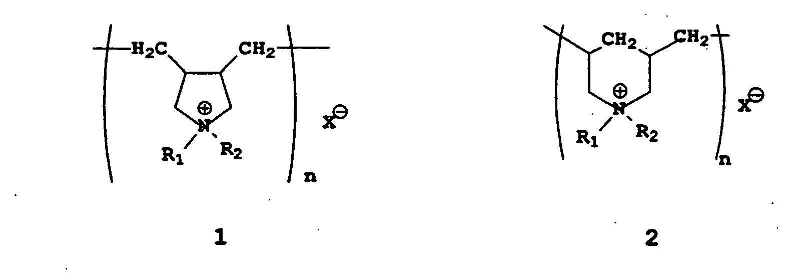

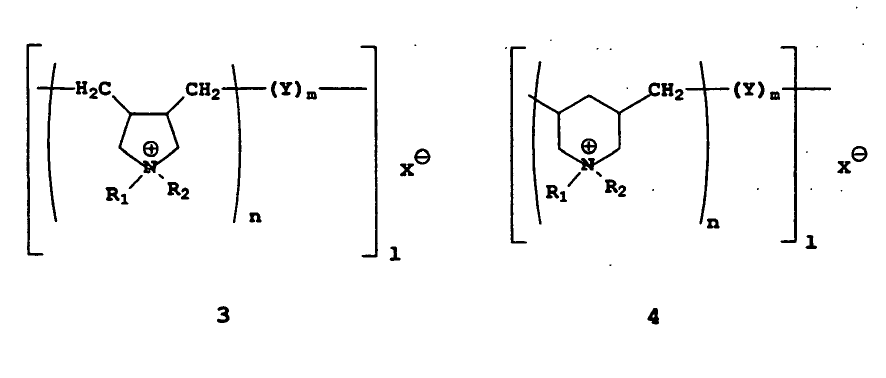

Die erfindungsgemäße Dispersion kann ferner Substanzen zur pH-Wert-Einstellung, wie Säuren, Basen oder Puffersysteme, Additive zur Stabilisierung der Dispersion, wie Salze, oberflächenaktive Stoffe, organische Lösungsmittel, Bakterizide und/oder Fungizide enthalten.

Ein weiterer Gegenstand der Erfindung ist ein Verfahren zur Herstellung der erfindungsgemäßen Dispersion welches dadurch gekennzeichnet ist, dass die Mischoxidpartikel in einem wässerigen Medium vordispergiert und anschließend dispergiert werden, wobei das wasserlösliche, kationische Polymer vor der Vordispergierung im wässerigen Medium vorgelegt wird oder während der Dispergierung zugegeben wird.

Eine andere Möglichkeit besteht darin, während des Dispergiervorganges abwechselnd Mischoxidpartikel und wasserlösliches kationisches Polymer in das wässerige Medium zugegeben werden.

Zur Vordispergierung eignen sich zum Beispiel Dissolver oder Zahnradscheibe. Zur Dispergierung eignen sich Rotor-Stator-Maschinen, wie Ultra Turrax (Firma IKA), oder solche der Firma Ystral, ferner Kugelmühlen, Rührwerkskugelmühlen. Höhere Energieeinträge sind mit einem Planetenkneter/-mixer möglich. Die Wirksamkeit dieses Systems ist jedoch mit einer ausreichend hohen Viskosität der bearbeiteten Mischung verbunden, um die benötigten hohen Scherenergien zum Zerteilen der Teilchen einzubringen. Mit Hochdruckhomogenisatoren können wässerige Dispersionen mit Sekundärpartikelgrößen von kleiner als 0,2 µm erhalten werden.

Bei diesen Vorrichtungen werden zwei unter hohem Druck stehende vordispergierte Suspensionsströme über eine Düse entspannt. Beide Dispersionsstrahlen treffen exakt aufeinander und die Teilchen mahlen sich selbst. Bei einer anderen Ausführungsform wird die Vordispersion ebenfalls unter hohen Druck gesetzt, jedoch erfolgt die Kollision der Teilchen gegen gepanzerte Wandbereiche. Die Operation kann beliebig oft wiederholt werden um kleinere Teilchengrößen zu erhalten.

Ein weiterer Gegenstand der Erfindung ist eine Streichfarbe zur Bildung der Tintenaufnahmeschicht, welche die erfindungsgemäße Dispersion und wenigstens ein hydrophiles Bindemittel enthält.

Als Bindemittel könen Verwendung finden: Polyvinylalkohol, teilweise oder vollständig verseift, sowie kationisierter Polyvinylalkohol mit einer primären,sekundären oder tertiären Aminogruppe oder einen tertiären Ammoniumgruppe an der Hauptkette oder an der Seitenkette. Ferner Kombinationen dieser Polyvinylalkohole untereinander und Polyvinylpyrrolidone, Polyvinylacetate, silanisierte Polyvinylalkohole, Styrol-Acrylat-Latices, Styrol-Butadien-Latices, Melamin-Harze, Ethylen-Vinylacetat-Copolymere, Polyurethan-Harze, synthetische Harze wie Polymethylmethacrylate, Polyesterharze (z.B. ungesättigte PolyesterHarze), Polyacrylate, modifizierte Stärke, Kasein, Gelantine und/oder Cellulose-Derivate (z.B. Carboxymethylcellulose). Bevorzugt kann Polyvinylakohol oder kationisierter Polyvinylakohol eingesetzt werden.

Weiterhin kann die Streichfarbe auch noch ein oder mehrere andere Pigmente wie Calciumcarbonate, Schichtsilikate, Aluminiumsilikate, Plastikpigmente (z.B. Polystryrol, Polyethylen, Polypropylen), Kieselsäuren (z.B. kolloidale Kieselsäuren, Fällungskieselsäuren), Kieselgele, kationisierte Abarten der genannten Kieselsäure-Verbindungen, Aluminium-Verbindungen (z.B. Aluminiumsole, kolloidale Aluminiumoxide und deren Hydroxy-Verbindungen, wie Pseudoboehmite, Boehmite, Aluminiumhydroxid), Magnesiumoxid, Zinkoxid, Zirkonoxid, Magnesiumcarbonate, Kaolin, Clay, Talkum, Calciumsulfat, Zinkcarbonat, Satinweiß, Lithopone, Zeolithe enthalten.

Die Streichfarbe kann einen Gehalt an Mischoxidpartikeln zwischen 10 und 60 Gew.-% aufweisen. Bevorzugt kann er größer 15 Gew.-%, besonders bevorzugt kann er größer 25 Gew.-% sein.

Die Streichfarbe kann ferner einen Anteil an Bindemittel, bezogen auf die Mischoxidpartikel, aufweisen, der zwischen 3 und 150 Gew.-% liegt. Bevorzugt kann er zwischen 10 und 40 Gew.-%, besonders bevorzugt kann er zwischen 3 und 15 Gew.-% liegen.

Zur Erhöhung der Wasserfestigkeit des Bindersystems und somit der Beschichtung können Vernetzer dienen wie Zirkonoxide, Borsäure, Melaminharze, Glyoxal und Isocyanate und andere Moleküle, die die Molekülketten des Bindersystems miteinander verbinden.

Des weiteren können Hilfsmittel wie optische Aufheller, Entschäumer, Netzmittel, pH-Puffer, UV- Absorber und Viskositätshilfsmittel eingesetzt werden.

Ein weiterer Gegenstand der Erfindung ist die Herstellung der Streichfarbe, welche dadurch gekennzeichnet ist, dass zu einer wässerigen Lösung des hydrophilen Bindemittels, der gegegebenenfalls noch weitere Additive zugesetzt sein können, unter Rühren die erfindungsgemäße Dispersion zugegegeben und gegebenenfalls verdünnt wird, bis sich das gewünschte Verhältnis von Mischoxidpartikel und Binder und der gewünschte Gesamtfeststoffgehalt einstellt. Die Reihenfolge der Zugabe ist dabei nicht wesentlich. Gegebenenfalls wird für eine bestimmte Zeitdauer nachgerührt und falls erforderlich danach im Vakuum entlüftet. Unter Additiven sind zum Beispiel Pigment, Vernetzer, optische Aufheller, Entschäumer, Netzmittel, pH-Puffer, UV- Absorber und Viskositätshilfsmittel zu verstehen.

Ein weiterer Gegenstand der Erfindung ist eine Tintenaufnahmeschicht unter Verwendung der erfindungsgemäßen Streichfarbe und eines Trägers. Als Träger können zum Beispiel Papier, beschichtetes Papier, Harzfolien, wie ein Polyesterharz, einschliesslich Polyethylenterephthalat, Polyethylennaphthalat, ein Diacetatharz, ein Triacetatharz, ein Acrylharz, ein Polycarbonatharz, ein Polyvinylchlorid, ein Polyimidharz, Celluphan, Celluloid undeine Glasplatte eingesetzt werden.

Bevorzugt sind sogenannte Fotobasispapiere, d.h. Papiere, auf denen eine/odere mehrere Lagen Polyethylenfolie auf Vorder- und oder Rückseite aufgebracht worden ist. Desweiteren Polyesterfolie, PVC-Folie oder vorbeschichtete Papiere.

Das erfindungsgemäße tintenaufnehmende Medium umfasst auch Medien, bei denen die tintenaufnehmende Schicht aus mehreren Beschichtungslagen des gleichen Typs oder anderen Lagen besteht. Die erfindungsgemäße Streichfarbe kann sich nur in einer oder mehreren Schichten befinden. So können zum Beispiel noch weitere tintenabsorptive Beschichtungen wie Schichten, die Fällungskieselsäure enthalten, unter der erfindungsgemäßen Streichfarbe aufgebracht werden. Es können desweiteren eine oder mehrere Polymerlagen (z.B Polyethylen) auf dem Substrat und/oder auf der erfindungsmäßigen Beschichtung aufgebracht werden, um die mechanische Stabilität und/oder den Glanz in der Beschichtung zu erhöhen (z.B. Fotobasispapier, Laminierung).

Die Träger können transparent oder opak sein. Die Dicke des Trägers ist nicht limitiert, bevorzugt werden Dicken zwischen 50 und 250 µm verwendet.

Ein weiterer Gegenstand der Erfindung ist die Herstellung eines tintenaufnehmenden Mediums, welche dadurch gekennzeichnet ist, dass die Streichfarbe auf den Träger aufgebracht und getrocknet wird. Das Aufbringen der Streichfarbe kann mit allen üblichen Auftragsverfahren, wie Walzenauftrag, Schaberegalisierung (Blade-coating), Luftbürste, Rakel (profiliert, glatt, Spalt), Guss-Strich-Verfahren, Filmpresse, Leimpresse, Vorhanggieß-Verfahren (curtain-coating) und Schlitzdüsen-Auftrag (z.B.Gießrakel, slot-dye) und Kombinationen hieraus aufgebracht werden. Bevorzugt werden Verfahren eingesetzt, die eine sehr homogene Beschichtung ermöglichen, wie wie z.B. Castcoating, Vorhanggieß-Verfahren und Schlitzdüsen-Auftrag.

Das beschichtete Substrat kann mit allen üblichen Verfahren wie Luft- oder Konvektionstrocknung (z.B. Heißluftkanal), Kontakt- oder Konduktionstrocknung, Energiestrahlentrocknung (z.B. Infrarot und Microwellen) getrocknet werden.

### Beispiele

### Analytische Verfahren

Die Viskosität wird bestimmt mit einem Gerät MCR300 mit Messsystem CC27, Fa. Parr-Physica, wobei bei gemessen wird bei Scherraten zwischen 0,01 bis 100 s⁻¹ gemessen wird. Angegeben wird die Viskosität bei 1s⁻¹.

Das Zeta-Potential und der isoelektrische Punkt wird bestimmt mit einem Gerät des Typs DT-1200 der Fa. Dispersion Technology Inc., nach dem CVI-Verfahren. Die Titration erfolgt mit KOH/HNO₃.

**Partikel:** Siliciumdioxid dotiert mit 0,25 Gew.-% Aluminiumoxid hergestellt nach DE-A-19847161 und hat eine BET-Oberfläche von 65 m²/g.

### Dispersionen

### Dispersion 1(D1) (Vergleichsbeispiel): Siliciumdioxid dotiert mit 0,25 Gew.-% Aluminiumoxid, ohne kationisches Additiv

800 g entsalztes Wasser werden vorgelegt und mittels eines Dissolvers nach und nach 600 g Siliciumdioxid dotiert mit 0,25 Gew.-% Aluminiumoxid eingetragen. Anschließend wird noch soviel Wasser zugegeben, dass der Feststoffgehalt 40% beträgt. Danach wird noch 30 min bei 7000 U/min dispergiert. Der pH-Wert der Dispersion beträgt 4,8, die Viskosität 1200 mPas bei 1/s. Das Zetapotential wird mittels CVI zu -19 mV bestimmt. Der Isoelektrische Punkt der Dispersion liegt unterhalb von pH3 und kann nicht genau bestimmt werden (typische Kieselsäure-Kurve).

### Dispersion 2 (D2)(Vergleichsbeispiel): Siliciumdioxid dotiert mit 0,25 Gew.-% Aluminiumoxid, ohne kationisches Additiv, mit Citronensäure)

wie Vergleichsbeispiel 1, mit dem Unterschied, das im Wasser zunächst 5 g Citronensäure gelöst werden. Der pH-Wert der Disperson beträgt 4,4, Zetapotential: -26 mV, iep s.o.

### Dispersion 3 (D3)(Vergleichsbeispiel): Siliciumdioxid und kationisches Polymer

800 g entsalztes Wasser werden vorgelegt und darin 16,5 g Polyquat 40U05NV (40 prozentige PDADMAC-Lösung in Wasser, PDADMAC = Poly(diallyldimethylammoniumchlorid)) gelöst. Das entspricht einer Additivmenge von 200 µg/m² Partikeloberfläche. Nun werden mittels eines Dissolvers portionsweise 600 g Siliciumdioxid (Aerosil OX 50, Degussa AG, BET-Oberfläche: 55 m²/g) eingetragen. Anschließend wird noch soviel Wasser zugegeben, dass der Feststoffgehalt 40% beträgt. Danach wird noch 30 min bei 7000 U/min dispergiert.

### Dispersion 4 (D4): Siliciumdioxid dotiert mit 0,25 Gew.-% Aluminiumoxid und Polyquat 40U05NV

wie Vergleichsbeispiel 1, mit dem Unterschied, dass im Wasser 24,38 g Polyquat 40U05NV (40 prozentige PDADMAC-Lösung in Wasser, Molekulargewicht ca. 5000 g/mol, Katpol GmbH, Bitterfeld) gelöst werden. Das entspricht einer Additivmenge von 200 µg/m² Partikeloberfläche.

### Dispersion 5 (D5): Siliciumdioxid dotiert mit 0,25 Gew.-% Aluminiumoxid und Polyquat 40U10

wie Beispiel 1, diesmal mit Polyquat 40U10 (40 prozentige PDADMAC-Lösung, 15000 g/mol, Katpol GmbH, Bitterfeld).

### Dispersion 6 (D6): Siliciumdioxid dotiert mit 0,25 Gew.-% Aluminiumoxid und Polyquat 40U50A

wie Beispiel 1, diesmal mit Polyquat 40U50A (40 prozentige PDADMAC-Lösung, 25000 g/mol, Katpol GmbH, Bitterfeld).

### Dispersion 7 (D7): Siliciumdioxid dotiert mit 0,25 Gew.-% Aluminiumoxid und Catiofast PR8153 (Fa. BASF)

wie Beispiel 1, diesmal mit 18,1g Catiofast PR8153 (54 prozentige Lösung).

### Dispersion 8 (D8): Siliciumdioxid dotiert mit 0,25 Gew.-% Aluminiumoxid und Polyquat 40U05NV

35 kg entsalztes Wasser werden vorgelegt und 1 kg Polyquat 40U05NV darin gelöst. Anschließend werden über den Saugstutzen der Conti-TDS (Ystral) 24 kg Siliciumdioxidpulver, dotiert mit 0,25 Gew.-% Aluminiumoxid innerhalb von 10 min dispergiert. Man läßt noch 5 min nachdispergieren.

### Dispersion 9 (D9): Siliciumdioxid dotiert mit 0,25 Gew.-% Aluminiumoxid und Polyquat 40U05NV

Wie Beispiel 8, mit dem Unterschied, dass 1,38 kg Polymerlösung und 36,5 kg Pulver verwendet werden, sodass sich ein Feststoffgehalt von 50% ergibt.

Die analytischen Daten der Dispersionen D1 bis D9 sind in Tabelle 1 zusammengefasst.

**Tabelle 1: Analytische Daten der Dispersionen D1 bis D9⁽¹⁾**

| **Dispersion** | **kationisches Polymer** | **pH** | **Viskosität** | **Zetapotential** | **IEP** |
|---|---|---|---|---|---|
| | | | mPas ⁽⁴⁾ | [mV/pH] | |
| D1 | keines | 4,8 | 1200 | -19/4,5 | <3 |
| D2⁽²⁾ | keines | 4,4 | 1050 | -26/4,5 | <3 |
| D3⁽³⁾ | Polyquat 40U05NV | 3,1 | 42 | +36/4,5 | 8,5 |
| D4 | Polyquat 40U05NV | 2,8 | 28 | +42/4,5 | 10,1 |
| D5 | Polyquat 40U10 | 2,9 | 35 | +41/4,5 | 10,2 |
| D6 | Polyquat 40U50A | 2,7 | 34 | +39/4,4 | 9,9 |
| D7 | Catiofast PR8153 | 3,4 | 110 | +37/4,4 | 9,5 |
| D8 | Polyquat 40U05NV | 2,75 | 20 | +43/4,0 | 10,1 |
| D9 | Polyquat 40U05NV | 2,9 | 800 | +39/4,3 | 9,9 |

| | | | | | |
|---|---|---|---|---|---|
| (1)Feststoffgehalt 40 Gew.-%, Bspl. 9: 50 Gew.-%; | | | | | |
| (2)Zugabe von Citronensäure; (3) Siliciumdioxid anstelle von dotiertem Siliciumdioxid; (4)bei 1s⁻¹ | | | | | |

### Streichfarben

### Rezeptur A:

Eine wässerige Polyvinylalkohol-Lösung (PVA Mowiol 40-88, Fa. Clariant) mit 12,26 % Feststoffgehalt wird in einem Becherglas vorgelegt und mit der Menge Wasser versetzt, so daß nach Zugabe der Dispersion D(n), eine Streichfarbe mit einem Feststoffgehalt von 34 Gew.-% erhalten wird. Dabei wird zu der mit Wasser versetzten Polyvinylalkohol-Lösung die jeweilige Dispersion unter Rühren mit einer Dissolverscheibe bei 500 Umdrehungen pro Minute (UPM) hinzugefügt. Nach Beendigung der Zugabe läßt man noch 30 Minuten bei 500 UPM nachrühren. Danach werden die Streichfarben mit Hilfe eines Exsikkators und einer Wasserstrahlpumpe entlüftet.

Die so erhaltenen Streichfarben S(n)-A enthalten 100 Teile der in der Dispersion D(n) enthaltenen Feststoffe (Mischoxidpartikel + kationisches Polymer) und 3 Teile PVA Mowiol 40-88.

Der Index n bezieht sich auf die Dispersionen D(n), die Streichfarebn S(n) und die tinteaufnehmenden Medien M(n). Dabei steht eine Dispersion D1 für n=1, D2 für n=2 usw. Die Streichfarben sind verknüpft mit den Dispersionen, d.h. aus der Dispersion D1 resultiert die Streichfarbe S1, aus D2 resultiert S(2) usw. Analog resultiert das tintenaufnehmende Medium M1 aus der Streichfarbe S1, usw.

**Rezeptur B:** Wie Rezeptur A, jedoch enthält die wässerige Polyvinylalkohol-Lösung (PVA Mowiol 26-88, Clariant) 13,30 Gew.-% Feststoffgehalt. Der Feststoffgehalt der Streichfarben wird auf 26 Gew.-% eingestellt.

Die so erhaltenen Streichfarben S(n)-B enthalten 100 Teile der in der Dispersion D(n) enthaltenen Feststoffe (Mischoxidpartikel + kationisches Polymer) und 10 Teile PVA Mowiol 26-88.

**Rezeptur C:** Wie Rezeptur A. Der Feststoffgehalt der Streichfarben wird auf 26 Gew.-% eingestellt.

Die so erhaltenen Streichfarben S(n)-C enthalten 100 Teile der in der Dispersion D(n) enthaltenen Feststoffe (Mischoxidpartikel + kationisches Polymer) und 8 Teile PVA Mowiol 40-88.

Die pH-Werte und Viskositäten der nach diesen Rezepturen erhaltenen Streichfarben sind in Tabelle 2 angegeben.

Aus den Viskositätsdaten kann man erkennen, daß die aus den Dispersionen D4, D5, D8 und D9 erhaltenen Streichfarben S4-A, S5-A, S8-A und S9-A eine geringe Viskosität bei einem sehr hohen Feststoffgehalt besitzen.

### Tintenaufnehmende Medien

Die Streichfarben mit dem Index A und B werden mit Hilfe eines 24 Micrometer Naßfilmspiralrakels auf ein mattes Inkjet-Papier (Fa. Zweckform, No. 2576) appliziert. Die Trocknung erfolgt mit einem Haarfön. Anschließend wird das beschichtete Papier bei 10 bar Druck und 50 °C mit Hilfe eines Laborkalanders satiniert. Das erhaltene Auftragsgewicht der Streichfarben mit Index A beträgt 12 g /m², mit Index B 15 g/m².

Die beschichteten Papiere werden mit einem Epson Stylus Color 980 mit den Einstellungen Premium Glossy Photo Paper, 1440 dpi, bidirektional, Kalibrierung Epson, Gamma (D): 1,8 mit einem internen Testbild bedruckt.

Die Streichfarben mit Index C werden mit Hilfe eines 100 Micrometer Naßfilmspiralrakels auf eine 100 Micrometer dicke, unbehandelte Polyesterfolie (Firma Benn) appliziert. Die Trocknung erfolgt mit einem Haarfön.

Die beschichteten Folien werden mit einem Epson Stylus Color 980 mit den Einstellungen Photo Quality Glossy Film, 1440 dp, Kalibrierung Epson, Gamma (D): 1,8 mit einem internen Testbild bedruckt.

Der visuelle Glanz-, Haftungs- und Testbildeindruck der hergestelltem tintenaufnehmenden Medien sind in Tabelle 3 widergegeben.

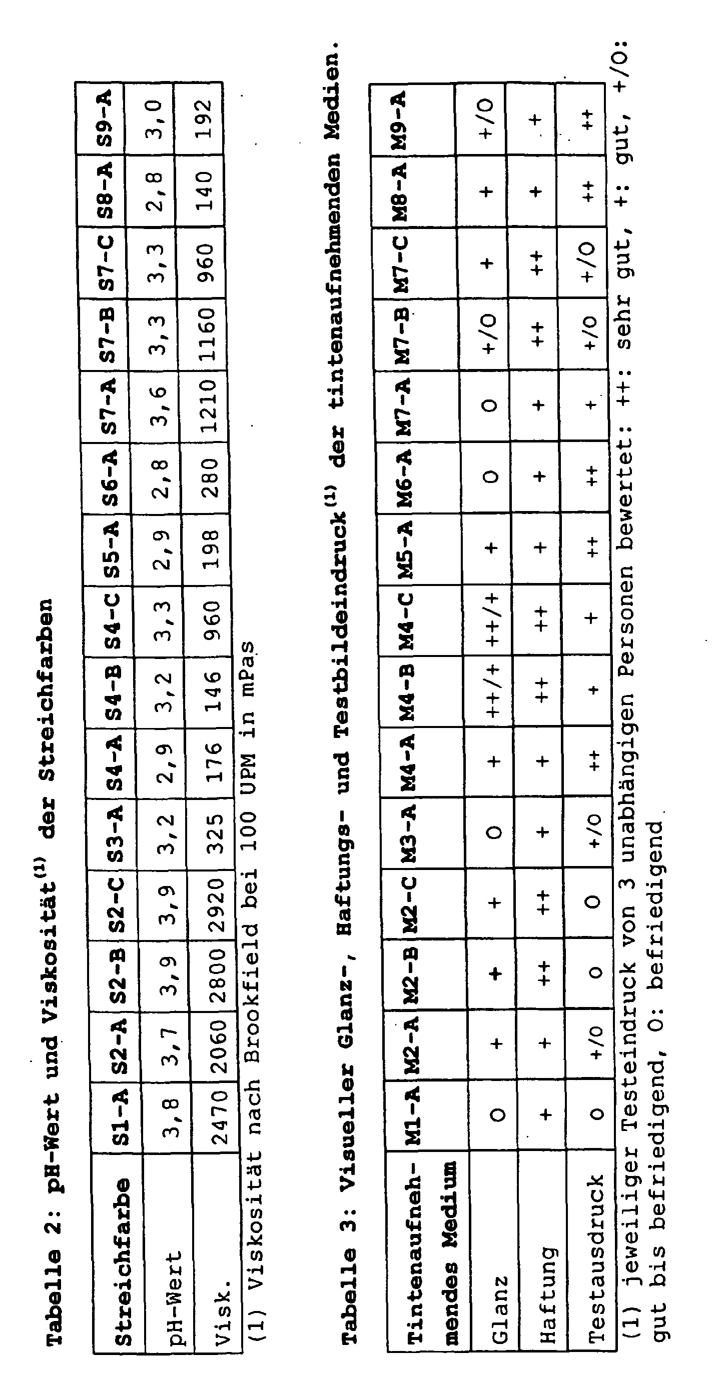

## Patentansprüche

1. Stabile, wässerige Dispersion enthaltend flammenhydrolytisch hergestellte Siliciumdioxid-Mischoxidpartikel mit Aluminiumoxid oder Titandioxid als Mischoxidkomponente und einer BET-Oberfläche zwischen 5 und 600 m²/g, die ein negatives Zeta-Potential aufweisen und ein gelöstes kationisches Polymer mit einer massengemittelten Molmasse von weniger als 100 000 g/mol, wobei die Dispersion ein positives Zeta-Potential aufweist.

2. Dispersion nach Anspruch 1, **dadurch gekennzeichnet, dass** deren Zeta-Potential mindestens 10 mV, bevorzugt mindestens 20 mV ist.

3. Dispersion nach den Ansprüchen 1 oder 2, **dadurch gekennzeichnet dass**, die Sekundärpartikelgrösse kleiner als 0,5 µm, bevorzugt kleiner als 0,3 µm, besonders bevorzugt kleiner als 0,2 µm ist.

4. Dispersion nach den Ansprüchen 1 bis 3, **dadurch gekennzeichnet, dass** deren pH-Wert zwischen 2 und 8, bevorzugt zwischen 2,5 und 6, besonders bevorzugt zwischen 3 und 5 liegt.

5. Dispersion nach den Ansprüchen 1 bis 4, **dadurch gekennzeichnet, dass** der Feststoffgehalt zwischen 10 und 70, bevorzugt zwischen 20 und 60, besonders bevorzugt zwischen 30 und 50 Gew.-% liegt.

6. Dispersion nach den Ansprüchen 1 bis 5, **dadurch gekennzeichnet, dass** die Viskosität kleiner als 5000 mPas bei einer Scherrate von 1 s⁻¹ ist.

7. Dispersion nach den Ansprüchen 1 bis 6, **dadurch gekennzeichnet, dass** der Gehalt an kationischem Polymer zwischen 0,1 und 15, bevorzugt zwischen 0,5 und 10, besonders bevorzugt zwischen 0,8 und 5 Gew.-%, bezogen auf die Menge aus kationischem Polymer und Mischoxidpartikel, beträgt.

8. Dispersion nach den Ansprüchen 1 bis 7, **dadurch gekennzeichnet, dass** die massengemittelte Molmasse des kationischen Polymers zwischen 2000 und 50000 g/mol aufweist.

9. Dispersion nach den Ansprüchen 1 bis 8, **dadurch gekennzeichnet**, das als kationisches Polymer Polymere mit mindestens einer quaternären Ammoniumgruppe, Phosphoniumgruppe, einem Säureaddukt einer primären, sekundären oder tertiären Amingruppe, Polyethylenimine, Polydiallylamine oder Polyallylamine, Polyvinylamine, Dicyandiamidkondensate, Dicyandiamid-Polyamin-Cokondensate, Polyamid-Formaldehyd-Kondensate, bevorzugt solche ausgehend von einer Diallylaminverbindung, besonders bevorzugt solche ausgehend von einer Dialkyldiallylaminverbindung, eingesetzt werden.

10. Dispersion nach den Ansprüchen 1 bis 9, **dadurch gekennzeichnet, dass** sie Substanzen zur pH-Wert-Einstellung, wie Säuren, Basen oder Puffersysteme, Additive zur Stabilisierung der Dispersion, wie Salze, oberflächenaktive Stoffe, organische Lösungsmittel, Bakterizide und/oder Fungizide enthält.

11. Verfahren zur Herstellung der Dispersion gemäß der Ansprüche 1 bis 10, **dadurch gekennzeichnet, dass** die Mischoxidpartikel in einem wässerigen Medium vordispergiert und anschließend dispergiert werden, wobei das wasserlösliche, kationische Polymer vor der Vordispergierung im wässerigen Medium vorgelegt wird oder während der Dispergierung zugegeben wird oder Mischoxidpartikel und kationisches Polymer abwechselnd zugegeben werden.

12. Streichfarbe zur Bildung einer Tintenaufnahmeschicht unter Verwendung der Dispersion gemäß der Ansprüche 1 bis 10 und zumindest einem hydrophilen Bindemittel.

13. Streichfarbe nach Anspruch 12, **dadurch gekennzeichnet, dass** der Gehalt Mischoxidpartikeln zwischen 10 und 60 Gew.-% liegt, bevorzugt größer 15 Gew.-%, besonders bevorzugt größer 25 Gew.-% ist.

14. Streichfarbe nach den Ansprüchen 12 oder 13, **dadurch gekennzeichnet, dass** der Anteil an Bindemittel bezogen auf die Mischoxidpartikel, zwischen 3 und 150 Gew.-%, bevorzugt zwischen 10 und 40 Gew.-%, besonders bevorzugt zwischen 3 und 15 Gew.-% liegt.

15. Verfahren zur Herstellung der Streichfarbe gemäß den Ansprüchen 12 bis 14, **dadurch gekennzeichnet, dass** zu einer wässerigen Lösung des hydrophilen Bindemittels, der gegegebenenfalls noch weitere Additive zugesetzt sein können, unter Rühren die erfindungsgemäße Dispersion zugibt und gegebenenfalls verdünnt, bis sich das gewünschte Verhältnis von Mischoxidpartikel und Binder und der gewünschte Gesamtfeststoffgehalt einstellt.

16. Tintenaufnehmendes Medium unter Verwendung der Streichfarbe gemäß den Ansprüchen 12 bis 14 und eines Trägers.

17. Verfahren zur Herstellung des tintenaufnehmenden Mediums nach Anspruch 16, **dadurch gekennzeichnet, dass** die Streichfarbe auf den Träger aufgebracht und getrocknet wird.

## Claims

1. Stable, aqueous dispersion, comprising silicon dioxide mixed-oxide particles produced by flame hydrolysis, with aluminium oxide or titanium dioxide as mixed-oxide components and having a BET specific surface area of 5 to 600 m²/g, which particles have a negative zeta potential and a dissolved cationic polymer having a mass average molar mass of less than 100 000 g/mol, wherein the dispersion has a positive zeta potential.

2. Dispersion according to Claim 1, **characterized in that** the positive zeta potential is at least 10 mV, preferably at least 20 mV.

3. Dispersion according to Claim 1 or 2, **characterized in that** the secondary particle size is less than 0.5 µm, preferably less than 0.3 µm, more preferably less than 0.2 µm.

4. Dispersion according to any of Claims 1 to 3, **characterized in that** the pH value is 2 to 8, preferably 2.5 to 6, more preferably 3 to 5.

5. Dispersion according to any of Claims 1 to 4, **characterized in that** the solids content is 10 to 70 wt. %, preferably 20 to 60 wt. %, more preferably 30 to 50 wt. %.

6. Dispersion according to any of Claims 1 to 5, **characterized in that** the viscosity is less than 5000 mPas at a shear rate of 1 s⁻¹.

7. Dispersion according to any of Claims 1 to 6, **characterized in that** the cationic polymer is present in an amount of 0.1 to 15 wt. %, preferably 0.5 to 10 wt. %, more preferably 0.8 to 5 wt. %, based on the amount of cationic polymer and mixed-oxide particles.

8. Dispersion according to any of Claims 1 to 7, **characterized in that** the mass average molar mass of the cationic polymer is 2000 to 50 000 g/mol.

9. Dispersion according to any of Claims 1 to 8, **characterized in that** the cationic polymer is selected from the group consisting of polymers containing at least one quaternary ammonium group, phosphonium group, an acid adduct of a primary, secondary or tertiary amine group, polyethylene imines, polydiallylamines or polyallylamines, polyvinylamines, dicyandiamide condensates, dicyandiamide-polyamine co-condensates, polyamide-formaldehyde condensates, preferably those based on a diallylamine compound, more preferably those based on a dialkyldiallylamine compound.

10. Dispersion according to any of Claims 1 to 9, **characterized in that** it comprises pH-setting substances such as acids, bases, buffers, additives to stabilize the dispersion, such as salts, surfactants, organic solvents, bactericides and/or fungicides.

11. Process for producing the dispersion according to any of Claims 1 to 10, **characterized in that** the mixed-oxide particles are predispersed, and subsequently dispersed, in an aqueous medium, the water-soluble, cationic polymer being initially charged to the aqueous medium prior to the predispersing or being added during the dispersing or mixed-oxide particles and cationic polymer being added alternately.

12. Coating composition for the formation of an ink-absorbing layer, using the dispersion according to any of Claims 1 to 10 and at least one hydrophilic binder.

13. Coating composition according to Claim 12, **characterized in that** the content of mixed-oxide particles is 10 to 60 wt. %, preferably greater than 15 wt. %, more preferably greater than 25 wt. %.

14. Coating composition according to Claim 12 or 13, **characterized in that** the content of binder in relation to the mixed-oxide particles is 3 to 150 wt. %, preferably 10 to 40 wt. %, more preferably 3 to 15 wt. %.

15. Process for producing the coating composition according to any of Claims 12 to 14, **characterized in that** it comprises adding the dispersion according to the invention, whilst stirring, to an aqueous solution of the hydrophilic binder, to which other additives may optionally be added, and if appropriate diluting until the desired ratio of mixed-oxide particles to binder and the desired total solids content are obtained.

16. Ink-absorbing medium, using the coating composition according to any of Claims 12 to 14 and a carrier.

17. Process for the production of the ink-absorbing medium according to Claim 16, **characterized in that** the coating composition is applied to the carrier and dried.

## Revendications

1. Dispersion stable aqueuse contenant des particules d'oxyde mixte de dioxyde de silicium préparées par hydrolyse à la flamme avec de l'oxyde d'aluminium ou du dioxyde de titane comme composant d'oxyde mixte et présentant une surface BET entre 5 et 600 m²/g, qui présentent un potentiel zêta négatif et un polymère cationique dissous présentant une masse molaire pondérale moyenne inférieure à 100 000 g/mole, la dispersion présentant un potentiel zêta positif.

2. Dispersion selon la revendication 1, **caractérisée en ce que** son potentiel zêta est d'au moins 10 mV, de préférence d'au moins 20 mV.

3. Dispersion selon les revendications 1 ou 2,
**caractérisée en ce que** la grosseur des particules secondaires est inférieure à 0,5 µm, de préférence inférieure à 0,3 µm, de manière particulièrement préférée inférieure à 0,2 *µ*m.

4. Dispersion selon les revendications 1 à 3,
**caractérisée en ce que** son pH est situé entre 2 et 8, de préférence entre 2,5 et 6, de manière particulièrement préférée entre 3 et 5.

5. Dispersion selon les revendications 1 à 4,
**caractérisée en ce que** la teneur en solides est située entre 10 et 70, de préférence entre 20 et 60, de manière particulièrement préférée entre 30 et 50% en poids.

6. Dispersion selon les revendications 1 à 5,
**caractérisée en ce que** la viscosité est inférieure à 5000 mPa.s à un taux de cisaillement de 1 s⁻¹.

7. Dispersion selon les revendications 1 à 6,
**caractérisée en ce que** la teneur en polymère cationique est comprise entre 0,1 et 15, de préférence entre 0,5 et 10, de manière particulièrement préférée entre 0,8 et 5% en poids, par rapport à la quantité de polymère cationique et de particules d'oxyde mixte.

8. Dispersion selon les revendications 1 à 7,
**caractérisée en ce que** la masse molaire pondérale moyenne du polymère cationique est comprise entre 2000 et 50000 g/mol.

9. Dispersion selon les revendications 1 à 8,
**caractérisée en ce qu'**on utilise comme polymère cationique des polymères présentant au moins un groupe d'ammonium quaternaire, un groupe phosphonium quaternaire, un produit d'addition d'acide d'un groupe amine primaire, secondaire ou tertiaire, des polyéthylèneimines, des polydiallylamines ou des polyallylamines, des polyvinylamines, des produits de condensation de dicyanodiamide, des produits de co-condensation de dicyanodiamide-polyamine, des produits de condensation de polyamide-formaldéhyde, de préférence ceux partant d'un composé de diallylamine, de manière particulièrement préférée ceux partant d'un composé de dialkyldiallylamine.

10. Dispersion selon les revendications 1 à 9,
**caractérisée en ce qu'**elle contient des substances pour le réglage du pH, telles que des acides, des bases ou des systèmes tampons, des additifs pour la stabilisation de la dispersion, tels que des sels, des substances tensioactives, des solvants organiques, des bactéricides et/ou des fongicides.

11. Procédé pour la préparation de la dispersion selon les revendications 1 à 10, **caractérisé en ce que** les particules d'oxyde mixte sont prédispersées et ensuite dispersées dans un milieu aqueux, le polymère cationique soluble dans l'eau étant disposé dans le milieu aqueux avant la prédispersion ou ajouté pendant la dispersion ou les particules d'oxyde mixte et le polymère cationique étant ajoutés alternativement.

12. Enduit pour former une couche d'absorption de l'encre avec utilisation de la dispersion selon les revendications 1 à 10 et au moins d'un liant hydrophile.

13. Enduit selon la revendication 12, **caractérisé en ce que** la teneur en particules d'oxyde mixte est située entre 10 et 60% en poids, de préférence supérieure à 15% en poids, de manière particulièrement préférée supérieure à 25% en poids.

14. Enduit selon les revendications 12 ou 13,
**caractérisé en ce que** la proportion de liant par rapport aux particules d'oxyde mixte est située entre 3 et 150% en poids, de préférence entre 10 et 40% en poids, de manière particulièrement préférée entre 3 et 15% en poids.

15. Procédé de préparation de l'enduit selon les revendications 12 à 14, **caractérisé en ce qu'**on ajoute à une solution aqueuse du liant hydrophile, à laquelle on peut encore avoir ajouté le cas échéant d'autres additifs, sous agitation, la dispersion selon l'invention et on dilue le cas échéant, jusqu'à ce que le rapport souhaité de particules d'oxyde mixte et de liant et la teneur totale en solides souhaitée se règlent.

16. Agent d'absorption d'encre avec utilisation de l'enduit selon les revendications 12 à 14 et d'un support.

17. Procédé de préparation d'un agent d'absorption d'encre selon la revendication 16, **caractérisé en ce que** l'enduit est appliqué sur le support et est séché.
